# EUROPEAN PATENT APPLICATION

(11) **EP 4 578 750 A1**
(43) Date of publication of application: **02.07.2025**
(21) Application number: 23220238.2
(22) Date of filing: 27.12.2023
(51) Int. Cl.: B60T 17/22, B01D 46/00, F16D 65/00

(54) **BRAKE DUST PARTICLE FILTER SYSTEM AND METHOD OF MONITORING LOAD CONDITION OF FILTER ELEMENT**

(71) Applicant: MANN+HUMMEL GmbH, 71636 Ludwigsburg (DE)
(72) Inventor: KÜMMERLING, Volker, 71636 Ludwigsburg (DE); WÖRZ, Tobias, 71636 Ludwigsburg (DE); FICHTNER, Christian, 71636 Ludwigsburg (DE); JESSBERGER, Thomas, 71636 Ludwigsburg (DE)
(74) Representative: Mann + Hummel Intellectual Property

(57) **Abstract**

A brake dust particle filter system (1) includes at least one brake assembly (2), a suction assembly (3) including at least one suction driving unit (4) for driving a suction volume flow from the at least one brake assembly (2) toward the at least one suction driving unit (4), and a filter assembly (6) including at least one filter element for filtering brake dust particles out of the suction volume flow, the filter assembly (6) being arranged fluidically between the at least one brake assembly (2) and the at least one suction driving unit (4). The suction assembly (3) further includes at least one suction monitoring unit for monitoring at least one operating parameter (7, 15) of the suction driving unit (4), the value of the at least one operating parameter (7, 15) being indicative of a load condition of the at least one filter element.

## Description

### TECHNICAL FIELD

The invention relates to a brake dust particle filter system including at least one brake assembly, and a suction assembly including at least one suction driving unit for driving a suction volume flow from the brake assembly toward the suction driving unit, and a filter assembly including at least one filter element for filtering brake dust particles out of the suction volume flow arranged fluidically between the brake assembly and the suction driving unit.

The invention further relates to a method of monitoring a load condition of a filter element included in said brake dust particle filter system.

### BACKGROUND ART

Such brake dust particle filter systems are per se known in the art. They are advantageously used with brake assemblies in both mobile and stationary applications. Mobile applications include, for example, passenger or goods vehicles and rail vehicles. Stationary applications include, for example, brake assemblies used in wind turbines.

Brake dust particles are commonly produced upon actuation of the brake assembly. Typically, brake abrasion due to friction between a brake pad and a brake disc of the brake assembly results in the production of said brake dust particles. The brake dust particles constitute a (fine) dust load in the ambient air of the brake disc. Such (fine) dust load of the ambient air is harmful to humans and nature. It should therefore not escape into the environment.

To this end, the suction assembly is provided. It includes a suction driving unit. The suction driving unit establishes and maintains a suction volume flow from the brake assembly toward the suction driving unit. One example for a suction driving unit is a pump. Said pump can drive a suction air flow from the brake assembly toward the suction driving unit. In general, the suction volume flow can be guided by means of a suction conducting pipe arranged between the brake assembly and the suction driving unit. The suction conducting pipe contains the suction volume flow. The suction volume flow in turn contains ambient air of the brake assembly loaded with brake dust particles. Therefore, the brake dust particles are guided away from the brake assembly. They are then separated from the suction volume flow in the filter element and cannot escape into the environment.

However, for example in mobile applications such as passenger vehicles, goods vehicles or rail vehicles, it is frequently encountered that said vehicles are operated in humid or wet conditions, for example fog or rain. In such conditions the ambient air of the brake assembly does not only contain brake dust particles but also a potentially considerable amount of water or dirty water contaminated with dirt particles. Said water then becomes part of the suction volume flow. It is sucked from the brake assembly toward the suction driving unit alongside the ambient air of the brake assembly via the suction volume flow.

This "dragging along" of water within the suction volume flow is disadvantageous and unwanted. The water may negatively affect the filter element provided for filtering and cleaning the ambient air from the brake dust particles. It may significantly reduce the filter performance of the filter element and decrease its service lifetime. Frequent replacements of the filter element may become necessary. Moreover, the intake of water may also have an impact on the suction driving unit, for example damage it or impair its performance or suction capacity.

As a result, it becomes necessary to monitor the load condition of the filter element. This typically achieved by monitoring a pressure drop over the filter element. To this end, it is necessary to provide two pressure sensors in the suction assembly. The first pressure sensor is arranged fluidically upstream of the filter element with respect to the suction volume flow. The second pressure sensor is arranged fluidically downstream of the filter element with respect to the suction volume flow. A comparison of the pressure values measured by the first pressure sensor and the second pressure sensor yields the pressure drop over the filter element. In case the suction volume flow drags along water the pressure drop over the filter element will increase. It thus becomes possible to monitor the load condition of the filter element.

However, the provision of two different pressure sensors is considered disadvantageous. On the one hand, providing two pressure sensors is very costly. On the other hand, it comes with significantly increased installation times for the brake dust particle filter system. Finally, the susceptibility to errors and failures of the brake dust particle filter system and thus its maintenance effort may be increased by the additional components.

### SUMMARY

It is therefore a first objective of the invention to provide a brake dust particle filter system which is constructionally simple and reliable as well as economically viable.

It is a second objective of the invention to provide a method of monitoring a load condition of a filter element included in said brake dust particle filter system which is operationally simple and reliable as well as economically viable.

The first objective is achieved in that the suction assembly further includes at least one suction monitoring unit for monitoring at least one operating parameter of the suction driving unit, a value of the at least one operating parameter being indicative of a load condition of the at least one filter element.

A brake dust particle filter system is provided which can monitor the load condition of the at least one filter element in a constructionally simple manner. To this end, at least one operating parameter of the suction driving unit is monitored. Said operating parameter may also be referred to as a working parameter, a state variable or a state parameter of the suction driving unit. Put another way, the operating parameter is a parameter related to the mechanical and/or electrical (and/or electronical) operation of the suction driving unit itself. The operating parameter is, however, not a parameter derived from the operation of the suction driving unit, e.g. a pressure in or a pressure drop over the filter element. Therefore, it is not necessary to monitor any parameters, e.g. pressure or pressure drop(s), derived from the operation of the suction driving unit. All constructional elements, e.g. pressure sensors, external to the suction driving unit can be dispensed with. Instead it suffices to only monitor the operation of the suction driving unit. The value of the corresponding at least one operating parameter inferred from this monitoring is in itself indicative of the load condition of the at least one filter element. This design is both constructionally simple as well as economically viable.

Further advantageous embodiments of the invention are provided in the dependent claims.

In one embodiment the suction monitoring unit is further for determining if the value of the at least one operating parameter is between a first operating parameter threshold value and a second operating parameter threshold value.

The operation of the suction driving unit can be considered from the point of view of several different operating parameters. Each of these different operating parameters can be characteristic for the operation of the suction driving unit. However, such an operating parameter typically does not assume a value which remains fixed over a lifetime of the suction driving unit or with respect to its operating conditions. Varying operating conditions for the suction driving unit may give rise to different values of the operating parameter(s) Such operating conditions may include environmental conditions affecting the operation of the suction driving unit. It can, for example, make a difference whether the suction driving unit is operated at an ambient temperature below the freezing point of water (e.g. at minus ten degrees Celsius) or above the freezing point of water (e.g. at plus thirty degrees Celsius). In each of these cases the operating parameter(s) in question may be (slightly) different. This is accounted for by defining an operating parameter threshold window for monitoring the at least one operating parameter of the suction driving unit. The operating parameter threshold window is defined by the first operating parameter threshold value and the second operating parameter threshold value. The operating parameter threshold window includes all values of the operating parameter(s) located between the first operating parameter threshold value and the second operating parameter threshold value. In accordance with the characteristic operating parameter(s) for each specific suction driving unit a characteristic operating parameter threshold window can be defined. All values of the operating parameter(s) in question which fall within said operating parameter threshold window are hence indicative of an operation of the suction driving unit uninterrupted by external influences. Put another way, all values of the operating parameter(s) in question which fall within said operating parameter threshold window are indicative of a normal load of the at least one filter element.

In another embodiment the suction monitoring unit is further for determining the value of the at least one operating parameter in a predetermined monitoring time interval subsequent a transient response of the at least one operating parameter following an activation of the suction driving unit.

Upon activation of the suction driving unit the value(s) of its operating parameter(s) ramp up from their respective idle state value(s). After a certain time interval, termed the transient response time interval, has elapsed the value(s) of the operating parameter(s) assume their operating state value(s). However, between the idle state value(s) and the operating state value(s) the value(s) of the operating parameter(s) typically undergo a transient response. This transient response occurs within the transient response time interval. During this transient response time interval the value(s) of the operating parameter(s) firstly ramp up from their idle state value(s) toward the operating parameter threshold window. The value(s) of the operating parameter(s) then enter the operating parameter threshold window. The value(s) of the operating parameter(s) may subsequently either converge to their operating state value(s). Or the value(s) of the operating parameter(s) may overshoot the operating parameter threshold window. The behavior of the value(s) of the operating parameter(s) with respect to the latter two alternatives depends on the operating parameter under consideration. Different operating parameters may exhibit different transient responses. In case of an overshooting the value(s) of the operating parameter(s) may subsequently relax toward their operating state value(s) within the operating parameter threshold window. In conclusion, the value(s) of the operating parameter(s) can only be meaningfully determined after the transient response of the operating parameter(s) has elapsed. Therefore, a predetermined monitoring time interval subsequent the transient response of the operating parameter(s) under consideration is selected to determine the value(s) of said operating parameter(s)

In another embodiment the suction monitoring unit is further for, if the value of the at least one operating parameter is determined to exceed the second operating parameter threshold value, determining that a load of the filter element is so high that the at least one filter element needs to be serviced or replaced.

As set forth above, values of the operating parameter(s) between the first operating parameter threshold value and the second operating parameter threshold value (i.e. within the operating parameter threshold window) are indicative of a normal load of the filter element. However, the load of the filter element may change over time. This can be due to changing environmental conditions, e.g. water being "dragged along" in the suction volume flow. It may also be due to the filter element reaching the end of its service lifetime. In any case, the load of the filter element changes from a normal load condition to a condition with an increased load of the filter element. Said increased load will also affect the operation of the suction driving unit. The suction driving unit will adapt its operation in order to account for the higher load of the filter element. As a result, a change in the value(s) of the operating parameter(s) of the suction driving unit will also occur. Put another way, as the load of the filter element increases the value(s) of the operating parameter(s) will also change accordingly. At some point during this change in the value(s) of the operating parameter(s) the latter will exit the operating parameter threshold window. The value(s) of the operating parameter(s) will exit the operating parameter threshold window by exceeding the second operating parameter threshold value. The second operating parameter threshold value is chosen such that this is indicative of the filter element needing service or replacement. It is understood that the first operating parameter threshold value may take the place of the second operating parameter value. This means the value(s) of the operating parameter(s) may alternatively exit the operating parameter threshold window by being below the first operating parameter threshold value. In this embodiment the first operating parameter threshold value is then chosen such that this is indicative of the filter element needing service or replacement. The designation "first operating parameter threshold value" and "second operating parameter threshold value" may be used interchangeably. For the purpose of the present embodiment it is only important that they define an operating parameter threshold window relative to one another.

In another embodiment the suction monitoring unit is further for, if the value of the at least one operating parameter is determined to be below the first operating parameter threshold value, determining that there is a failure of the at least one filter element or a leakage in the brake dust particle filter system.

As set forth above, values of the operating parameter(s) between the first operating parameter threshold value and the second operating parameter threshold value (i.e. within the operating parameter threshold window) are indicative of a normal load of the filter element. However, the load of the filter element may change over time. This can be due to a failure of the filter element. It may also be due to the fact that the brake dust particle filter system is experiencing leakage. In any case, the load of the filter element changes from a normal load condition to a condition with a decreased load of the filter element. Said decreased load will also affect the operation of the suction driving unit. In this scenario the suction driving unit typically starts to "draw incorrect air". The suction driving unit will adapt its operation in order to account for the lower load of the filter element. As a result, a change in the value(s) of the operating parameter(s) of the suction driving unit will also occur. Put another way, as the load of the filter element decreases the value(s) of the operating parameter(s) will also change accordingly. At some point during this change in the value(s) of the operating parameter(s) the latter will exit the operating parameter threshold window. The value(s) of the operating parameter(s) will exit the operating parameter threshold window by being below the first operating parameter threshold value. The first operating parameter threshold value is chosen such that this is indicative of a failure of the filter element or a leakage in the brake dust particle filter system. It is understood that the second operating parameter threshold value may take the place of the first operating parameter value. This means the value(s) of the operating parameter(s) may alternatively exit the operating parameter threshold window by exceeding the second operating parameter threshold value. In this embodiment the second operating parameter threshold value is then chosen such that this is indicative of a failure of the filter element or a leakage in the brake dust particle filter system. The designation "first operating parameter threshold value" and "second operating parameter threshold value" may be used interchangeably. For the purpose of the present embodiment it is only important that they define an operating parameter threshold window relative to one another.

In one embodiment the operating parameter includes a current state variable of the suction driving unit and/or a speed state variable of the suction driving unit.

The operating parameter may by chosen as a current state variable of the suction driving unit. In this case, the first operating parameter threshold value defines a lower current state variable threshold value. The second operating parameter threshold value defines an upper current state variable threshold value. The lower current state variable threshold value and the upper current state variable threshold value define a current state variable threshold window. If after the transient response time interval the value of the current state variable is below the upper current state variable threshold value and above the lower current state variable threshold value, the filter element experiences a normal load.

However, the load of the filter element may change over time. This can be due to changing environmental conditions, e.g. water being "dragged along" in the suction volume flow. It may also be due to the filter element reaching the end of its service lifetime. In any case, the load of the filter element changes from a normal load condition to a condition with an increased load of the filter element. Said increased load will also affect the operation of the suction driving unit. The suction driving unit will adapt its operation in order to account for the higher load of the filter element. As a result, the current consumption of the suction driving unit will also increase. Put another way, as the load of the filter element increases the value of the current state variable will also increase accordingly. At some point during this increase the value of the current state variable will exit the current state variable threshold window. The value of the current state variable will exit the current state variable threshold window by exceeding the upper current state variable threshold value. The upper current state variable threshold value is chosen such that this is indicative of the filter element needing service or replacement.

The change of the load in the filter element may also have other reasons. These reasons may include a failure of the filter element or a leakage in the brake dust particle filter system. In any case, the load of the filter element changes from a normal load condition to a condition with a decreased load of the filter element. Said decreased load will also affect the operation of the suction driving unit. In this scenario the suction driving unit typically starts to "draw incorrect air". The current consumption of the suction driving unit will decrease. The suction driving unit will adapt its operation in order to account for the lower load of the filter element. As a result, a change in the value of the current state variable of the suction driving unit will also occur. Put another way, as the load of the filter element decreases the value of the current state variable will also decrease accordingly. At some point during this decrease in the value of the current state variable the latter will exit the current state variable threshold window. The value of the current state variable will exit the current state variable threshold window by being below the lower current state variable threshold value. The lower current state variable threshold value is chosen such that this is indicative of a failure of the filter element or a leakage in the brake dust particle filter system.

Additionally or alternatively the operating parameter may by chosen as a speed state variable of the suction driving unit. In this case, the first operating parameter threshold value defines an upper speed state variable threshold value. The second operating parameter threshold value defines a lower speed state variable threshold value. The lower speed state variable threshold value and the upper speed state variable threshold value define a speed state variable threshold window. If after the transient response time interval the value of the speed state variable is below the upper speed state variable threshold value and above the lower speed state variable threshold value, the filter element experiences a normal load.

However, the load of the filter element may change over time. This can be due to changing environmental conditions, e.g. water being "dragged along" in the suction volume flow. It may also be due to the filter element reaching the end of its service lifetime. In any case, the load of the filter element changes from a normal load condition to a condition with an increased load of the filter element. Said increased load will also affect the operation of the suction driving unit. The suction driving unit will adapt its operation in order to account for the higher load of the filter element. As a result, the speed of the suction driving unit will decrease, while the current state variable remains constant. Put another way, as the load of the filter element increases the value of the speed state variable will decrease accordingly. At some point during this decrease the value of the speed state variable will exit the speed state variable threshold window. The value of the speed state variable will exit the speed state variable threshold window by being below the lower speed state variable threshold value. The lower speed state variable threshold value is chosen such that this is indicative of the filter element needing service or replacement.

The change of the load in the filter element may also have different reasons. These reasons may include a failure of the filter element or a leakage in the brake dust particle filter system. In any case, the load of the filter element changes from a normal load condition to a condition with a decreased load of the filter element. Said decreased load will also affect the operation of the suction driving unit. In this scenario the suction driving unit typically starts to "draw incorrect air". The speed of the suction driving unit will increase, while the current state variable remains constant. The suction driving unit will adapt its operation in order to account for the lower load of the filter element. As a result, a change in the value of the speed state variable of the suction driving unit will also occur. Put another way, as the load of the filter element decreases the value of the speed state variable will increase accordingly. At some point during this increase the value of the speed state variable the latter will exit the speed state variable threshold window. The value of the speed state variable will exit the speed state variable threshold window by exceeding the upper speed state variable threshold value. The upper speed state variable threshold value is chosen such that this is indicative of a failure of the filter element or a leakage in the brake dust particle filter system.

It is apparent from the above consideration that the current state variable and the speed state variable exhibit opposite behavior. They may be used as the operating parameters alone or in combination.

In another embodiment the suction driving unit is connected to a network bus, in particular a vehicle CAN bus, for providing measured values of the at least one operating parameter to the suction monitoring unit.

The state or condition of the suction driving unit can thus be gathered from the network bus. The network bus may also be used to analyze the state or condition of the suction driving unit. Typically, in automotive application the CAN bus of the vehicle already includes information about the operating parameter(s) of the suction driving unit. In particular the current state variable and the speed variable are included in a typical vehicle CAN bus. Hence, the invention can be implemented in a constructionally simple manner in automotive applications.

In another embodiment the load condition of the at least one filter element is determined further based on a number of braking operations of a vehicle including the brake dust particle filter system.

The second objective of the invention is achieved in that the method of monitoring the load condition of the at least one filter element included in the aforementioned brake dust particle filter system includes determining the value of the at least one operating parameter in a predetermined monitoring time interval subsequent a transient response of the at least one operating parameter following an activation of the suction driving unit.

The behavior of the operating parameter(s) of the suction driving unit have been set forth in detail in the description above. For the sake of avoiding repetitions said detailed description pertaining to the brake dust particle filter system is incorporated here with respect to the corresponding method step in its entirety.

In another embodiment the method further includes determining if a value of the at least one operating parameter is between a first operating parameter threshold value and a second operating parameter threshold value.

As set forth above, values of the operating parameter(s) between the first operating parameter threshold value and the second operating parameter threshold value (i.e. within the operating parameter threshold window) are indicative of a normal load of the filter element. The ramifications of the value(s) of the operating parameter(s) exiting the operating parameter threshold window have been described above in some detail. For the sake of avoiding repetitions said detailed description pertaining to the brake dust particle filter system is incorporated here with respect to the corresponding method step in its entirety.

In another embodiment the method further includes issuing a warning message to a user of the brake dust particle filter system, if the value of the at least one operating parameter is determined to be below the first operating parameter threshold value or to exceed the second operating parameter threshold value.

If the value(s) of the operating parameter(s) is below the first operating parameter threshold value or exceeds the second operating parameter threshold value, this is indicative of an abnormal load condition of the filter element. In those cases, the filter element may be in need of servicing or replacing. The filter element may also have failed, or the brake dust particle filter system experiences a leakage. In both scenarios the user of the brake dust particle filter system must act in order to ensure proper functioning of the filter element and thus the brake dust particle filter system. To this end, it is advantageous to provide the user of the brake dust particle filter system with a warning message as soon as the value(s) of the operating parameter(s) under consideration indicate an abnormal load condition of the filter element.

In another embodiment the method further includes determining the load condition of the at least one filter element, based on the value of the at least one operating parameter and a number of braking operations of a vehicle including the brake dust particle filter system.

### BRIEF DESCRIPTION OF DRAWINGS

Further advantages can be seen in the following description of the drawings. The drawings show examples of embodiments of the invention. The drawings, description and claims contain numerous features in combination. The person skilled in the art will expediently consider the features individually and combine them to form further useful combinations. Exemplary embodiments are:
- Figure 1: showing a brake dust particle filter system according to the present invention;
- Figure 2: showing an exemplary plot of a current state variable over time according to the present invention; and
- Figure 3: showing exemplary plot of a speed state variable over time according to the present invention.

### DETAILED DESCRIPTION

The figures only show examples and are not to be understood as limiting.

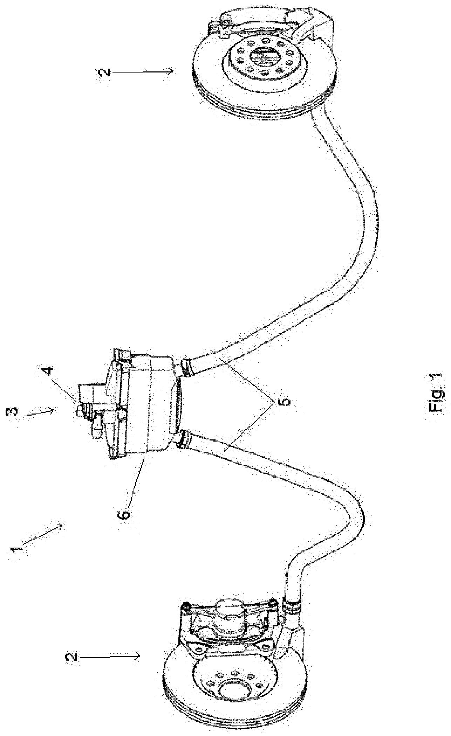

Figure 1 shows a brake dust particle filter system 1. The brake dust particle filter system 1 includes two identical brake assemblies 2 in the present embodiment. It also includes a suction assembly 3. The suction assembly 3 includes a suction driving unit 4. The suction driving unit 4 and the brake assemblies 2 are fluidically connected with each other by means of a suction conducting pipe 5. A filter assembly 6 is arranged fluidically between the suction driving unit 4 and the brake assemblies 2.

Upon actuation of the brake assemblies 2 brake dust particles are produced due to brake abrasion. The brake dust particles constitute a (fine) dust load in the ambient air of the brake assemblies 2. Such (fine) dust load of the ambient air is harmful to humans and nature. It should therefore not escape into the environment. To this end, the suction driving unit 4 drives a suction volume flow. The suction volume collects the brake dust particles at the brake assemblies 2. The suction volume flow is then directed from the brake assemblies 2 toward the suction driving unit 4. This suction volume flow is guided through the suction conducting pipe 5. It enters the filter assembly 6 in which a filter element (not shown) is arranged. The filter element filters the brake dust particles out of the suction volume flow and contains them. They may therefore not escape into the environment.

The foregoing describes the normal operating condition of the brake dust particle filter system 1. During said normal operating condition the filter element typically exhibits a normal load. However, especially in automotive application, the brake dust particle filter system 1 may be frequently operated in wet or dirty environments. In such environments the suction volume flow driven by the suction driving unit 4 may also contain water or dirt particles. The "dragging along" of water or dirt particles affects the performance and load of the filter element. The filter element may then exhibit an abnormal load. In order to nonetheless ensure proper functioning of the filter element and the filter assembly 6 monitoring of the load of the filter element is needed.

This monitoring of the load condition of the filter element is achieved by means of a suction monitoring unit (not shown). The load condition of the at least one filter element may be determined further based on a number of braking operations of a vehicle including the brake dust particle filter system 1.

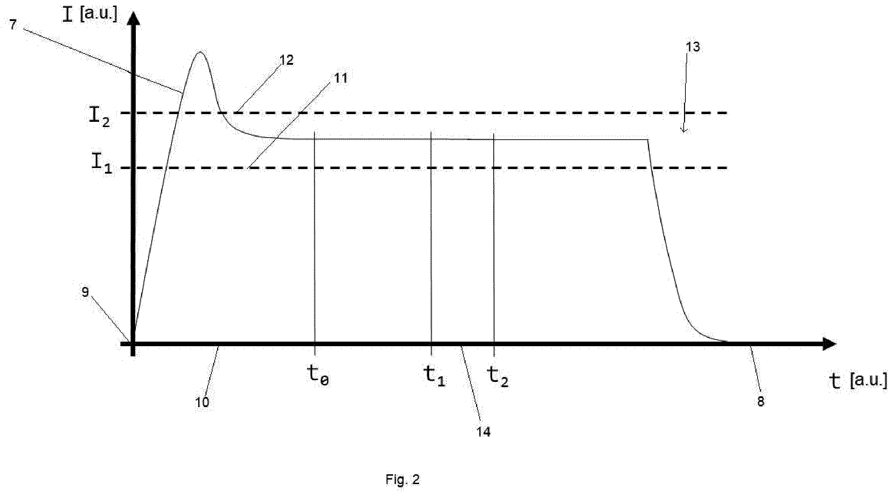

Figure 2 shows a first embodiment of the working principle of the suction monitoring unit.

The plot depicted in Fig. 2 shows a current state variable 7, also designated I, of the suction driving unit 4 in arbitrary units (a.u.) plotted against an operating time 8 of the suction driving unit 4 in arbitrary units (a.u.). The current state variable 7 represents a current consumption of the suction driving unit 4. The current state variable 7 is thus an operating parameter of the suction driving unit 4.

Upon activation of the suction driving unit 4 the value of the current state variable 7 will ramp up from its respective current idle state value 9. During this ramping up from the current idle state value 9 the current state variable 7 undergoes a transient response within a transient response time interval 10. In the depicted plot the transient response time interval 10 extends until the time t0. Subsequent to the transient response time interval 10 the value of the current state variable 7 assumes a value characteristic of a normal operation of the suction driving unit 4.

The current state variable 7 can now be used to monitor the load condition of the filter element of the filter assembly 6. To this end, a lower current state variable threshold value 11, also designated I1 in Fig. 2, is defined as a first operating parameter threshold value. Additionally an upper current state variable threshold value 12, also designated I2 in Fig. 2, is defined as a second operating parameter threshold value. The lower current state variable threshold value 11 and the upper current state variable threshold value 12 define a current state variable threshold window 13. If, after the transient response time interval 10, the value of the current state variable 7 is below the upper current state variable threshold value 12 and above the lower current state variable threshold value 11, the filter element experiences a normal load.

However, the load of the filter element may change over time. This can be due to changing environmental conditions, e.g. water being "dragged along" in the suction volume flow. It may also be due to the filter element reaching the end of its service lifetime. In any case, the load of the filter element changes from a normal load condition to a condition with an increased load of the filter element. Said increased load will also affect the operation of the suction driving unit 4. The suction driving unit 4 will adapt its operation in order to account for the higher load of the filter element. As a result, the current consumption of the suction driving unit 4 will also increase. Put another way, as the load of the filter element increases the value of the current state variable 7 will also increase accordingly. At some point during this increase the value of the current state variable 7 will exit the current state variable threshold window 13. The value of the current state variable 7 will exit the current state variable threshold window 13 by exceeding the upper current state variable threshold value 12. The upper current state variable threshold value 12 is chosen such that this is indicative of the filter element needing service or replacement.

The change of the load in the filter element may also have other reasons. These reasons may include a failure of the filter element or a leakage in the brake dust particle filter system 1. In any case, the load of the filter element changes from a normal load condition to a condition with a decreased load of the filter element. Said decreased load will also affect the operation of the suction driving unit 4. In this scenario the suction driving unit 4 typically starts to "draw incorrect air". The current consumption of the suction driving unit 4 will decrease. The suction driving unit 4 will adapt its operation in order to account for the lower load of the filter element. As a result, a change in the value of the current state variable 7 of the suction driving unit 4 will also occur. Put another way, as the load of the filter element decreases the value of the current state variable 7 will also decrease accordingly. At some point during this decrease in the value of the current state variable 7 the latter will exit the current state variable threshold window 13. The value of the current state variable 7 will exit the current state variable threshold window 13 by being below the lower current state variable threshold value 11. The lower current state variable threshold value 11 is chosen such that this is indicative of a failure of the filter element or a leakage in the brake dust particle filter system 1.

As can also be inferred from Fig. 2 the monitoring of the current state variable 7 cannot be sensibly performed within the transient response time interval 10. During the transient response time interval 10 the value of the current state variable 7 overshoots the current state variable threshold window 13. Hence, the value of the current state variable 7 does not allow to infer the load of the filter element from the current state variable 7 within the transient response time interval 10. This is instead done within a predetermined monitoring time interval 14 subsequent to the transient response time interval 10. The boundaries of said predetermined monitoring time interval 14 are indicated with t1 and t2 in Fig. 2.

The current state variable 7 only represents one possible operating parameter which is suitable for monitoring the load of the filter element. Another such variable is a speed state variable 15 of the suction driving unit 4.

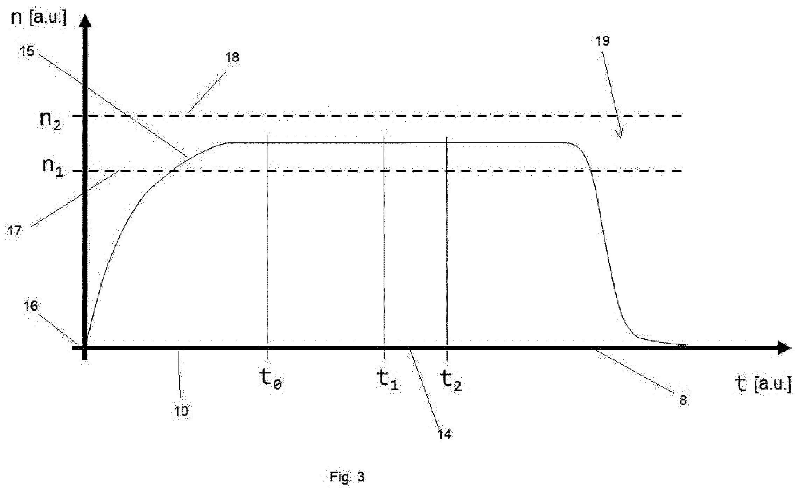

Figure 3 therefore shows a second embodiment of the working principle of the suction monitoring unit.

The plot depicted in Fig. 3 shows the speed state variable 15, also designated n, of the suction driving unit 4 in arbitrary units (a.u.) plotted against the operating time 8 of the suction driving unit 4 in arbitrary units (a.u.). The speed state variable 15 represents a speed of the suction driving unit 4. The speed state variable 15 is thus an operating parameter of the suction driving unit 4.

As with the current state variable 7, upon activation of the suction driving unit 4 the value of the speed state variable 15 will ramp up from its respective speed idle state value 16. During this ramping up from the speed idle state value 16 the speed state variable 15 undergoes a transient response within the transient response time interval 10. In the depicted plot the transient response time interval 10 extends until the time t0. Subsequent to the transient response time interval 10 the value of the speed state variable 15 assumes a value characteristic of a normal operation of the suction driving unit 4.

The speed state variable 15 can now be used to monitor the load condition of the filter element of the filter assembly 6. To this end, a lower speed state variable threshold value 17, also designated n1 in Fig. 3, is defined as a second operating parameter threshold value. Additionally an upper speed state variable threshold value 18, also designated n2 in Fig. 3, is defined as a first operating parameter threshold value. The lower speed state variable threshold value 17 and the upper speed state variable threshold value 18 define a speed state variable threshold window 19. If, after the transient response time interval 10, the value of the speed state variable 15 is below the upper speed state variable threshold value 18 and above the lower speed state variable threshold value 17, the filter element experiences a normal load.

However, the load of the filter element may change over time. This can be due to changing environmental conditions, e.g. water being "dragged along" in the suction volume flow. It may also be due to the filter element reaching the end of its service lifetime. In any case, the load of the filter element changes from a normal load condition to a condition with an increased load of the filter element. Said increased load will also affect the operation of the suction driving unit 4. The suction driving unit 4 will adapt its operation in order to account for the higher load of the filter element. As a result, the speed of the suction driving unit 4 will decrease, while the current state variable 7 remains constant. Put another way, as the load of the filter element increases the value of the speed state variable 15 will decrease accordingly. At some point during this decrease the value of the speed state variable 15 will exit the speed state variable threshold window 19. The value of the speed state variable 15 will exit the speed state variable threshold window 19 by being below the lower speed state variable threshold value 17. The lower speed state variable threshold value 17 is chosen such that this is indicative of the filter element needing service or replacement.

The change of the load in the filter element may also have other reasons. These reasons may include a failure of the filter element or a leakage in the brake dust particle filter system 1. In any case, the load of the filter element changes from a normal load condition to a condition with a decreased load of the filter element. Said decreased load will also affect the operation of the suction driving unit 4. In this scenario the suction driving unit 4 typically starts to "draw incorrect air". The speed of the suction driving unit 4 will increase. The suction driving unit 4 will adapt its operation in order to account for the lower load of the filter element. As a result, a change in the value of the speed state variable 15 of the suction driving unit 4 will also occur. Put another way, as the load of the filter element decreases the value of the speed state variable 15 will increase accordingly, while the current state variable 7 remains constant. At some point during this increase the value of the speed state variable 15 the latter will exit the speed state variable threshold window 19. The value of the speed state variable 15 will exit the speed state variable threshold window 19 by exceeding the upper speed state variable threshold value 18. The upper speed state variable threshold value 18 is chosen such that this is indicative of a failure of the filter element or a leakage in the brake dust particle filter system 1.

As can be inferred from Fig. 3 the monitoring of the speed state variable 15 can also not be sensibly performed within the transient response time interval 10. During the transient response time interval 10 the value of the speed state variable 15 ramps up to its normal operating value within the speed state variable threshold window 19. Hence, the value of the speed state variable 15 does not allow to infer the load of the filter element from the speed state variable 15 within the transient response time interval 10. This is instead done within the predetermined monitoring time interval 14 subsequent to the transient response time interval 10. The boundaries of said predetermined monitoring time interval 14 are indicated with t1 and t2 in Fig. 3.

In conclusion it is not necessary to monitor any parameters, e.g. pressure or pressure drop(s), derived from the operation of the suction driving unit 4 in order to gain information about the load of the filter element. All constructional elements, e.g. pressure sensors, external to the suction driving unit 4 can be dispensed with. Instead it suffices to only monitor the operation of the suction driving unit 4. The value of the corresponding at least one operating parameter, such as the current state variable 7 and/or the speed state variable 15 inferred from this monitoring is in itself indicative of the load condition of the filter element. This design is both constructionally simple as well as economically viable.

## Claims

1. A brake dust particle filter system (1) comprising:
at least one brake assembly (2);
a suction assembly (3) comprising at least one suction driving unit (4) for driving a suction volume flow from the at least one brake assembly (2) toward the at least one suction driving unit (4); and
a filter assembly (6) comprising at least one filter element for filtering brake dust particles out of the suction volume flow, the filter assembly (6) being arranged fluidically between the at least one brake assembly (2) and the at least one suction driving unit (4),
**characterized in that** the suction assembly (3) further comprises at least one suction monitoring unit for monitoring at least one operating parameter (7, 15) of the suction driving unit (4), the value of the at least one operating parameter (7, 15) being indicative of a load condition of the at least one filter element.

2. The brake dust particle filter system (1) according to claim 1, wherein the suction monitoring unit is further for determining if the value of the at least one operating parameter (7, 15) is between a first operating parameter threshold value (11, 18) and a second operating parameter threshold value (12, 17).

3. The brake dust particle filter system (1) according to claim 2, wherein the suction monitoring unit is further for determining the value of the at least one operating parameter (7, 15) in a predetermined monitoring time interval (14) subsequent a transient response (10) of the at least one operating parameter (7, 15) following an activation of the suction driving unit (4).

4. The brake dust particle filter system (1) according to any of claims 2 or 3, wherein the at least one operating parameter (7, 15) comprises a current state variable (7) of the suction driving unit (4), and
the suction monitoring unit is further for, if the value of the current state variable (7) is determined to exceed the second operating parameter threshold value (12), determining that a load of the at least one filter element is so high that the at least one filter element needs to be serviced or replaced.

5. The brake dust particle filter system (1) according to any of claims 2 or 3, wherein the at least one operating parameter (7, 15) comprises a current state variable (7) of the suction driving unit (4), and
the suction monitoring unit is further for, if the value of the current state variable (7) is determined to be below the first operating parameter threshold value (11), determining that there is a failure of the at least one filter element or a leakage in the brake dust particle filter system (1).

6. The brake dust particle filter system (1) according to any of claims 2 or 3, wherein the at least one operating parameter (7, 15) comprises a speed state variable (15) of the suction driving unit (4), and
the suction monitoring unit is further for, if the value of the speed state variable (15) is determined to be below the first operating parameter threshold value (17), determining that a load of the at least one filter element is so high that the at least one filter element needs to be serviced or replaced.

7. The brake dust particle filter system (1) according to any of claims 2 or 3, wherein the at least one operating parameter (7, 15) comprises a speed state variable (15) of the suction driving unit (4), and
the suction monitoring unit is further for, if the value of the speed state variable (15) is determined to exceed the second operating parameter threshold value (18), determining that there is a failure of the at least one filter element or a leakage in the brake dust particle filter system (1).

8. The brake dust particle filter system (1) according to any of claims 1 to 7, wherein the suction driving unit (4) is connected to a network bus for providing measured values of the at least one operating parameter (7, 15) to the suction monitoring unit (4).

9. The brake dust particle filter system (1) according to any of claims 1 to 8, wherein the load condition of the at least one filter element is determined further based on a number of braking operations of a vehicle comprising the brake dust particle filter system (1).

10. A method of monitoring the load condition of the at least one filter element comprised in the brake dust particle filter system (1) according to claim 1, the method comprising determining the value of the at least one operating parameter (7, 15) in a predetermined monitoring time interval (14) subsequent a transient response (10) of the at least one operating parameter (7, 15) following an activation of the suction driving unit (4).

11. The method according to claim 10, further comprising determining if the value of the at least one operating parameter (7, 15) is between a first operating parameter threshold value (11, 18) and a second operating parameter threshold value (12, 17).

12. The method according to claim 11, further comprising issuing a warning message to a user of the brake dust particle filter system (1), if the value of the at least one operating parameter (7, 15) is determined to be below the first operating parameter threshold value (11, 18) or to exceed the second operating parameter threshold value (12, 17).

13. The method according to claim 11, wherein the at least one operating parameter (7, 15) comprises a current state variable (7) of the suction driving unit (4), and
the method further comprises:
if the value of the current state variable (7) is determined to exceed the second operating parameter threshold value (12), determining that a load of the at least one filter element is so high that the at least one filter element needs to be serviced or replaced; and
if the value of the current state variable (7) is determined to be below the first operating parameter threshold value (11), determining that there is a failure of the at least one filter element or a leakage in the brake dust particle filter system (1).

14. The method according to claim 11, wherein the at least one operating parameter (7, 15) comprises a speed state variable (15) of the suction driving unit (4), and
the method further comprises:
if the value of the speed state variable (15) is determined to be below the first operating parameter threshold value (17), determining that a load of the at least one filter element is so high that the at least one filter element needs to be serviced or replaced; and
if the value of the speed state variable (15) is determined to exceed the second operating parameter threshold value (18), determining that there is a failure of the at least one filter element or a leakage in the brake dust particle filter system (1).

15. The method according to any of claims 10 to 14, further comprising determining the load condition of the at least one filter element, based on the value of the at least one operating parameter (7, 15) and a number of braking operations of a vehicle comprising the brake dust particle filter system (1).
